(19) Europäisches Patentamt
European Patent Office
Office européen des brevets

(11) **EP 0 514 726 B1**

(12) **EUROPÄISCHE PATENTSCHRIFT**

(45) Veröffentlichungstag und Bekanntmachung des Hinweises auf die Patenterteilung:
**03.07.1996  Patentblatt 1996/27**

(51) Int Cl.⁶: **G01M 1/24**

(21) Anmeldenummer: **92107838.2**

(22) Anmeldetag: **09.05.1992**

(54) **Verfahren zur Berücksichtigung von Lageabweichungen der Kurbelzapfen einer Kurbelwelle beim Auswuchten und Vorrichtung hierzu**

Method for making allowance for deviation of the crank pin position of a crankshaft during balancing and device therefor

Méthode pour considérer, pendant l'équilibrage, la déviation de position des manetons de la bielle d'un vilebrequin et dispositif pour cela

(84) Benannte Vertragsstaaten:
**DE ES FR GB IT**

(30) Priorität: **24.05.1991  DE 4117051**

(43) Veröffentlichungstag der Anmeldung:
**25.11.1992  Patentblatt 1992/48**

(73) Patentinhaber: **CARL SCHENCK AG**
**D-64273 Darmstadt (DE)**

(72) Erfinder: **Schönfeld, Harald**
**W-6100 Darmstadt (DE)**

(56) Entgegenhaltungen:
**EP-A- 0 066 638        EP-A- 0 175 803**
**DE-B- 1 275 308        US-A- 4 938 064**

## Beschreibung

Die Erfindung betrifft ein Verfahren zur Berücksichtigung von Lageabweichungen der Kurbelzapfen einer Kurbelwelle beim Auswuchten gemäß dem Oberbegriff des Patentanspruchs 1 sowie eine Vorrichtung hierzu gemäß dem Oberbegriff des Patentanspruchs 7.

Bei Kurbelwellen handelt es sich um Rotoren, bei denen an den Kurbelzapfen später Pleuel befestigt werden, die zusätzliche Massen darstellen, die zum Teil synchron mit der Kurbelwelle umlaufen. Um eine Kurbelwelle optimal auswuchten zu können, müssen diese zusätzlichen Massenanteile beim Auswuchten einer Kurbelwelle mit berücksichtigt werden.

Dazu ist ein Verfahren bekannt, nach dem sogenannte Meisterringe auf die Kurbelzapfen aufgeklemmt werden. Diese Meisterringe stellen praktisch eine Ersatzmasse des später anzubringenden Kurbeltriebs dar, wodurch seine Wirkung bereits beim Auswuchten mit berücksichtigt wird. Da ein derartiges Verfahren während des Auswuchtvorgangs sehr aufwendig ist, weil derartige Meisterringe mit unterschiedlichen Gewichtsklassen bereitgehalten und montiert werden müssen, hat man in einem anderen bekannten Verfahren die Massenanteile des Kurbeltriebs außerhalb der Kurbelwelle in entsprechendem Abstand und Winkellage an der Antriebsspindel der Auswuchtmaschine angeordnet. Derartige Zusatzunwuchtmassen sind allerdings nur bei unsymmetrisch angeordneten Kurbelzapfen erforderlich, da sich bei symmetrisch angeordneten Kurbelzapfen die dadurch hervorgerufenen Unwuchtwirkungen kompensieren.

Bei einer derartig kompensierten Kurbelwelle können beim späteren Betrieb Unwuchtwirkungen dadurch auftreten, daß die geometrische Anordnung der Lagerzapfen durch Fertigungsungenauigkeiten von ihrem Sollwert abweichen. Zur Berücksichtigung derartiger Lageungenauigkeiten ist nach der EP 0 175 803 ein Verfahren bekannt, bei dem ein Lagerzapfen als Bezugszapfen fest eingeklemmt wird und durch Längenmeßtaster die Koordinaten der übrigen Lagerzapfen gemessen werden. Daraus wird in einer Recheneinrichtung die tatsächliche Lage der einzelnen Lagerzapfen ermittelt und die Unwuchtwirkung dieser Lageabweichung von einer vorgegebenen Sollage beim Auswuchtvorgang mit berücksichtigt. Ein derartiges Verfahren zur Berücksichtigung der Lageungenauigkeiten konnte bisher weder in der Unwuchtmeßstation noch in der Ausgleichsstation vorgenommen werden, da die Unwuchtmessung dynamisch durchgeführt wird und dadurch kein ausreichender Raum für die aus dem Rotationsbereich verbringbaren Meßtaster zur Verfügung stand. Die Ausgleichsstation war für die Anordnung der Lageungenauigkeitsmessung auch wenig geeignet, da dort durch die Ausgleichswerkzeuge eine erhebliche Verschmutzung der hochempfindlichen Längenmeßtaster nicht zu vermeiden war. Deshalb wurde dieser Meßabschnitt in einer eigenständigen Maschinenstation durchgeführt.

Aus der US 4,938,064 ist eine optische Erfassungsvorrichtung bekannt, die ein Verfahren zur Erfassung der Winkellage eines Kurbelzapfens beim Auswuchten einer Kurbelwelle beschreibt. Dabei wird mittels eines Lichtstrahls durch die Drehachse der Kurbelwelle beim Auswuchtvorgang die Winkellage des Kurbelzapfens ermittelt. Allerdings ist aus dieser Schrift kein Hinweis ersichtlich, nach dem eine Berücksichtigung einer Lageabweichung im Rahmen eines Unwuchtausgleichs erfolgen könnte.

Der Erfindung liegt deshalb die Aufgabe zugrunde, den apparativen Aufwand bei der Berücksichtigung der Lageungenauigkeit der Kurbelzapfen einer Kurbelwellen beim Auswuchten zu verringern.

Diese Aufgabe wird durch die im Patentanspruch 1 und Patentanspruch 7 angegebene Erfindung gelöst. Weiterbildungen und vorteilhafte Ausführungsbeispiele der Erfindung sind in den abhängigen Ansprüchen angegeben.

Die Erfindung hat den Vorteil, daß die Messung der Lageungenauigkeiten während des Auswuchtmeßlaufs oder deren Beschleunigungs- oder Abbremsphasen durchgeführt werden kann. Es ist deshalb keine separate Arbeitsstation für die Ermittlung der Lageungenauigkeiten erforderlich. Da diese Messung mittels eines gebündelten Lichtstrahls durchgeführt wird, erfolgt ein berührungsloses Messen, das überaus schnell und verschleißfrei durchgeführt werden kann und sich vorteilhaft für die Auswuchtung von Kurbelwellen als Serienteilen eignet. Darüber hinaus bedarf es in der Nähe des Meßobjekts lediglich eines Lichtsenders und eines Lichtempfängers, die in beliebigem Abstand zum Meßobjekt angeordnet werden können. Da diese Teile häufig sehr kleine Baueinheiten darstellen und deshalb an verschiedenen Orten außerhalb des Rotationsbereichs der Kurbelwelle anbringbar sind, ist eine derartige Meßeinrichtung sehr einfach in gebräuchliche Auswuchtstationen für Kurbelwellen integrierbar oder auch nachträglich nachrüstbar.

Da die Kurbelzapfen bei auszuwuchtenden Kurbelwellen bereits fertig bearbeitet sind, liegt der Durchmesser bereits sehr genau vor. Bei derzeitig gebräuchlichen Winkelschrittgebern mit einem Auflösungsverhältnis bis annähernd zehntausend Teilen bei einer Umdrehung ist die Position der einzelnen Kurbelzapfen mit höchster Genauigkeit ermittelbar. Da ein derartiger Meßvorgang während der Rotation der Kurbelwelle vorgenommen wird, gestattet er bereits zwei Messungen während einer Umdrehung. Wird eine derartige Messung während des gesamten Unwuchtmeßlaufs durchgeführt, so erhält man eine Vielzahl von Einzelmeßergebnissen, die mit Hilfe einer Mittelwertbildung überaus genaue Endergebnisse liefern.

Zur Festlegung der Ist-Position der Kurbelzapfen wird vorzugsweise ein optischer Winkelschrittgeber verwandt, der einen beliebigen Referenzpunkt festlegt und synchron mit der Kurbelwelle umläuft. Dadurch ist eine drehzahlunabhängige Ermittlung der Lageungenauigkeiten möglich. Die Lageungenauigkeiten können deshalb auch bei verschiedenartigen Kurbelwellen ermittelt werden, deren Unwucht mit unterschiedlichen Drehzahlen gemessen wird.

Die Erfindung wird anhand eines Ausführungsbeispiels, das in der Zeichnung dargestellt ist, näher erläutert. Es zeigen:

Fig. 1 die schematische Darstellung einer Meßvorrichtung zur Ermittlung der Lageungenauigkeit der Kurbelzapfen für einen Achtzylinder-Verbrennungsmotor;

Fig. 2 die schematische Betrachtung der Drehwinkellage eines beliebigen Kurbelzapfens;

Fig. 3 ein Impulsdiagramm einer Lichtempfangsvorrichtung.

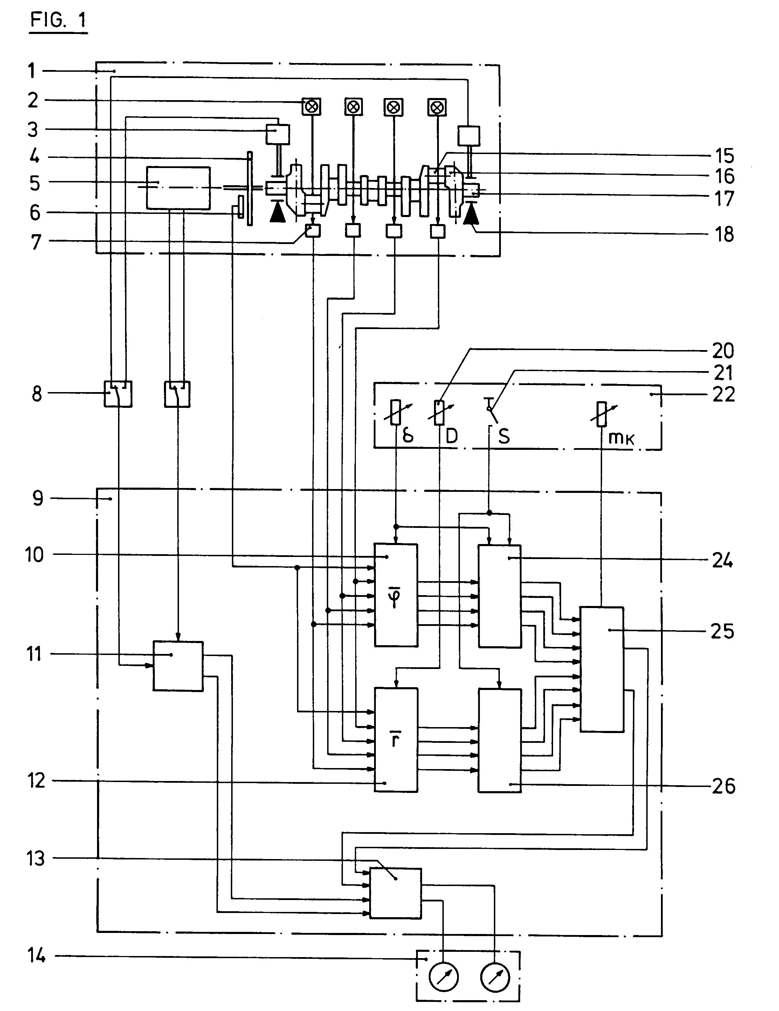

Die Fig. 1 zeigt eine schematische Darstellung der erfindungsgemäßen Meßeinrichtung zur Berücksichtigung von Lageungenauigkeiten der Kurbelzapfen 15 einer Kurbelwelle 16, die in einer Unwuchtmeßstation 1 angeordnet ist, sowie die dazugehörige Auswerteeinrichtung 9.

Die Unwuchtmeßstation 1 besteht im wesentlichen aus den beiden Lagerständern 18, die zur Auflage der Lagerzapfen 17 der auszuwuchtenden Kurbelwelle 16 dienen. Die schematische Darstellung zeigt eine Unwuchtmeßstation 1, in der eine Kurbelwelle 16 für einen Achtzylinder-Verbrennungsmotor angeordnet ist. An den Lagerständern 18 sind jeweils Schwingungsaufnehmer 3 befestigt, die zur Messung der dynamischen Unwucht dienen. Die Kurbelwelle 16 ist mit einem Antrieb 5 versehen, der die Unwuchtmeßdrehzahl erzeugt. Im Antriebsstrang der Unwuchtmeßstation 1 ist ein Winkelschrittgeber 4 angebracht, bei dem ein winkelpositionierendes Bauteil synchron mit der auszuwuchtenden Kurbelwelle 16 umläuft. Dieses Bauteil kann z. B. eine Skalenscheibe sein, die von einem Sensor 6 abgetastet wird, so daß deren Position bezogen auf einen festgelegten Punkt bestimmbar ist.

Parallel zur Kurbelwelle 16 enthält die Unwuchtmeßstation 1 vier Lichtquellen 2, die einen stark gebündelten Lichtstrahl erzeugen, der so ausgerichtet ist, daß er rechtwinklig die Drehachse der Kurbelwelle 16 im Bereich der Kurbelzapfen 15 schneidet. Zweckmäßigerweise setzt man für derartige Lichtquellen Laserlichterzeuger ein. Diesen Lichtquellen 2 gegenüber sind vier Lichtempfangsvorrichtungen 7 angeordnet, auf die der Lichtstrahl auftrifft. Dabei ist für jeden zu messenden Kurbelzapfen 15 jeweils eine Lichtquelle 2 und eine ihr gegenüber angeordnete Lichtempfangsvorrichtung 7 vorzusehen. So kann eine derartige Einrichtung auch für Unwuchtmeßstationen vorgesehen werden, die die Unwucht von Kurbelwellen mit einer anderen Anzahl von Kurbelzapfen mißt. Dafür können zusätzliche Lichtschranken vorgesehen oder überzählige abgeschaltet werden. Soweit längere oder kürzere Kurbelwellen gemessen werden sollen, können die Lichtquellen als auch deren Lichtempfangsvorrichtungen in axialer Richtung zur Kurbelwellenachse verschiebbar angeordnet werden, so daß diese jeweils auf den zu messenden Lagerzapfen einstellbar sind.

Die Unwuchtmeßstation 1 ist sowohl mit ihrem Unwuchtmeßteil als auch mit ihrem Geometriemeßteil über Leitungen mit einer elektronischen Auswerteeinrichtung 9 verbunden. Die Auswerteeinrichtung 9 enthält eine herkömmliche Unwuchtmeßschaltung 11, an die die Unwuchtmeßsignale der Schwingungsaufnehmer 3 über eine elektronische Schalteinrichtung 8 herangeführt sind. Gleichzeitig ist die Unwuchtmeßschaltung 11 über einen gleichartigen elektronischen Schalter mit einem Referenzsignalgeber der Unwuchtmeßstation verbunden. Aus den Signalen der Schwingungsaufnehmer 3 und den Referenzsignalgeber errechnet die Unwuchtmeßschaltung 11 in bekannter Weise die Größe und Lage der Unwucht in jeder Lagerebene.

Bei dem Winkelschrittgeber 4 wird vorzugsweise ein sogenannter Gray-Code-Geber eingesetzt, der eine Auflösung von $2^{13}$ Schritten pro Umdrehung besitzt. Ein derartiger Winkelschrittgeber 4 stellt im Grunde eine Skalenscheibe mit konzentrisch angeordneten Code-Skalen dar, die optisch abgetastet werden. Dabei kann die Position der Skalenscheibe, die mit 8192 Markierungen auf ihrer Oberfläche versehen ist, mit einer Genauigkeit von ca. 2,7 Bogen-Minuten bestimmt werden. Dadurch liegt die Winkelstellung der Skalenscheibe bzw. jedes Kurbelwellenteiles bezogen auf einen Referenzpunkt jederzeit vor.

Der Winkelschrittgeber 4 ist sowohl mit einer Winkelrechenschaltung 10 als auch mit einer Radienrechenschaltung 12 verbunden. An die Eingänge der Winkelrechenschaltung 10 und der Radienrechenschaltung 12 sind gleichfalls die vier Lichtempfangsvorrichtungen 7 herangeführt. Diese liefern bei einer Kurbelwellenumdrehung jeweils zwei Impulsphasen, die der Dauer der Lichtstrahlunterbrechung durch die Kurbelzapfen 15 entsprechen. Bei einer Kurbelwellenumdrehung sind also für jeden Kurbelzapfen 15 zwei Winkel meßbar, die den Beginn der Lichtstrahlunterbrechung, und zwei Winkel, die das Ende der Lichtstrahlunterbrechung bzw. den Beginn ($\alpha_{OA}$, $\alpha_{UA}$) und das Ende ($\alpha_{OE}$, $\alpha_{UE}$) der Hellphase angeben. Da die Winkel immer bezogen auf einen bestimmten Referenzpunkt angegeben werden müssen, ergibt sich ein konstanter maschinenbezogener Versatzwinkel $\delta$, der den Winkel zwischen dem Lichtstrahl und einer gedachten Linie durch den Referenzpunkt und der Drehachse angibt. Dieser Versatzwinkel stellt eine Maschinenkonstante dar, die sowohl verstellbar als auch fest eingebbar vorgegeben werden kann. Beim vorliegenden Ausführungsbeispiel ist der Versatzwinkel $\delta$ mit Hilfe einer Einstellvorrichtung vorgebbar und wird der Winkelrechenschaltung 10 als auch einer Winkelvergleicherschaltung 24 zugeführt.

Mit Hilfe der Signale aus den Lichtempfangsvorrichtungen und dem Winkelschrittgeber 4 ergeben sich zwei bestimmte Winkelbereiche, in denen der Lichtstrahl durch einen Kurbelzapfen 15 bei einer Kurbelwellenumdrehung unterbrochen wird. Diese Winkelbereiche sind durch Anfangs- und Endzeitpunkte bezogen auf einen Referenzzeitpunkt bestimmbar. Diese Zeitpunkte werden durch vier Winkelwerte $\alpha$ festgelegt. Diese vier Winkelwerte legen gleichzeitig zwei Winkelbereiche fest, in denen der Lagerzapfen 15 den Lichtstrahl nicht unterbricht und die als Hellphasen bezeichnet werden. Der Beginn der Hellphase, in der sich der Kurbelzapfen 15 oberhalb des Lichtstrahls befindet, wird mit $\alpha_{OA}$ und der Winkel, durch den diese Hellphase beendet wird, mit $\alpha_{OE}$ bezeichnet. Entsprechend werden die Winkel, bei denen sich der Kurbelzapfen 15 unterhalb des Lichtstrahls befindet, mit Hellphase bezeichnet, die mit $\alpha_{UA}$ beginnt und mit $\alpha_{UE}$ endet. Daraus errechnet die Winkelrechenschaltung nach der Formel:

$$\varphi = \frac{\alpha_{OA} + \alpha_{OE}}{2} - \delta + 90°$$

den jeweiligen mittleren Kurbelzapfenwinkel bezogen auf einen Referenzpunkt des Winkelschrittgebers 4. Der mittlere Kurbelzapfenwinkel ergibt sich aus der vorgenannten Bezugslinie durch die Drehachse und einer gedachten Linie durch den Mittelpunkt des Kurbelzapfens und der Drehachse.

Da bei jeder Kurbelwellenumdrehung der Kurbelzapfen 15 den Lichtstrahl zweimal unterbricht, liegen zwei verschiedene Winkelbereiche vor, aus deren Anfangs- und Endwerten jeweils der mittlere Kurbelzapfenwinkel bestimmt werden kann. Die Winkelrechenschaltung 10 ist deshalb so ausgebildet, daß sie jeweils beide Kurbelzapfenwinkel bestimmt und zur Erhöhung der Genauigkeit daraus einen Mittelwert bildet. Zur weiteren Erhöhung der Genauigkeit können diese Kurbelzapfenwinkel auch für mehrere Umdrehungen bestimmt, gespeichert und daraus ein sehr genauer Mittelwert gebildet werden.

Die Winkelrechenschaltung 10 ermittelt für jeden Kurbelzapfen 15 einen mittleren Kurbelzapfenwinkel $\varphi$, der gleichzeitig an den Ausgängen der Winkelrechenschaltung 10 als entsprechende Signale anliegen. Diese vier Kurbelzapfenwinkel werden einer Winkelvergleicherschaltung 24 zugeführt, die diese mit zuvor eingespeicherten Winkelwerten vergleicht und jeweils deren Differenz bildet.

Die zuvor eingespeicherten Winkelwerte werden auf die gleiche zuvor beschriebene Weise ermittelt, allerdings mit Hilfe einer Meisterwelle, die die Sollwerte der jeweiligen Kurbelzapfenwinkel darstellen. Zur Speicherung der jeweiligen Sollwerte enthält eine Einstellvorrichtung 22 einen Speicherschalter 21, der sowohl mit der Winkelvergleicherschaltung 24 als auch mit einer Radienvergleicherschaltung 26 verbunden ist und einen Speicherimpuls erzeugt und dadurch die Speicherung der jeweils anliegenden Meßergebnisse bewirkt.

Die Differenzwerte aus der Winkelvergleicherschaltung 24 für jeden Kurbelzapfenwinkel werden einer Unwuchtrechenschaltung 25 zugeführt, die mit deren Hilfe einen Korrekturwert errechnet. Dazu wird der Unwuchtrechenschaltung 25 zusätzlich noch ein Wert der an den Kurbelzapfen 15 anbringbaren Ersatzmassen durch ein Einstellglied in der Einstellvorrichtung vorgegeben. Daraus errechnet die Unwuchtrechenschaltung 25 einen Winkelkorrekturwert, der der Abweichung gegenüber der Meisterwelle entspricht.

Parallel zur Winkelberechnung wird in einem weiteren Rechenverfahren in der Auswerteeinrichtung 9 mit Hilfe einer Radienrechenschaltung 12 der Drehradius des Mittelpunktes jedes Kurbelzapfens 15 zur Drehachse ermittelt. Denn auch die Genauigkeit des Abstands des Kurbelzapfens 15 von der Drehachse beeinflußt die Unwuchtwirkung einer mit einem Kurbeltrieb versehenen rotierenden Kurbelwelle. Dazu werden der Radienrechenschaltung 12 ebenfalls die Signale der Lichtempfangsvorrichtung 7 zugeführt. Gleichfalls ist die Radienrechenschaltung 12 auch mit dem Ausgang des Winkelschrittgebers 4 verbunden, der die Absolutwerte der Anfangs- ($\alpha_{OA}$, $\alpha_{UA}$) und Endwinkel ($\alpha_{OE}$, $\alpha_{UE}$) liefert. Der Radienrechenschaltung 12 ist zusätzlich über ein Durchmesserstellglied 20 in der Einstellvorrichtung 22 der Zapfendurchmesser vorgebbar. Da die auszuwuchende Kurbelwelle 16 bereits fertig bearbeitete Zapfen aufweist, liegt dieser Wert sehr genau vor. Aus dem Zapfendurchmesser D und den Winkelwerten mindestens einer Hellphase errechnet die Radienrechenschaltung 12 mit Hilfe der Rechenformel:

$$r = \frac{D}{2_{cos} \cdot \dfrac{\alpha_{OE} - \alpha_{OA}}{2}}$$

den jeweiligen Radius des Zapfenmittelpunktes zur Drehachse. Zur Verbesserung der Genauigkeit wird wiederum ein mittlerer Radienwert aus den zwei pro Umdrehung gelieferten Lichtstrahlunterbrechungen ermittelt. Durch die Mittelwertbildung beider ermittelter Meßwerte bei Durchlauf des Lichtstrahls von oben nach unten und von unten nach oben wird gleichzeitig ein Ausgleich der Ungenauigkeit der Höhenlage des Lichtstrahls zur Drehachse erreicht. Gleichfalls kann wiederum zur Erhöhung der Genauigkeit die Radienrechenschaltung 12 so ausgebildet sein, daß sie einen Mittelwert der ermittelten Radien während einer ganz bestimmten Anzahl von gemessenen Umdrehungen ermittelt.

Als Ergebnis liegen am Ausgang der Radienrechenschaltung 12 vier einzelne Radienwerte vor, die den Istradius des Mittelpunkts jedes Kurbelzapfens 15 zur Drehachse angeben. Diese Ergebnisse werden einer nachfolgenden Radienvergleicherschaltung 26 zugeführt, der diese Werte mit zuvor gespeicherten Radienwerten einer Meisterwelle vergleicht. Dabei stellen diese Werte sogenannte Sollwerte dar, die in einem vorher durchgeführten Meßlauf mittels einer Meisterwelle ermittelt wurden. Diese Sollwerte werden durch einen Speicherimpuls des Speicherschalters S in den Speicher der Radienvergleicherschaltung 26 eingelesen. Die Radienvergleicherschaltung 26 führt daraufhin einen Soll-Ist-Vergleich durch und bildet vier Ausgangssignale, die der Abweichung der ermittelten Radien zu den Radien der Meisterwelle entsprechen. Diese Ausgangssignale werden der Unwuchtrechenschaltung 25 zugeführt, die mit Hilfe der vorgebbaren Ersatzmasse des vorgesehenen Kurbeltriebs daraus einen Korrekturwert bildet, der der Unwuchtwirkung aus den Radienabweichungen entspricht. Aus den Lageabweichungen des Winkelvergleichers und des Radienvergleichers ermittelt die Unwuchtrechenschaltung 25 Unwuchtwerte, die der Unwuchtwirkung der gesamten Lageabweichungen der Kurbelzapfen entsprechen. Diese Werte werden als Winkel- und Betragswerte einer Addierschaltung 13 zugeführt, der gleichfalls die Werte der Unwucht in den Lagerebenen zur Verfügung stehen, die in der Unwuchtmeßschaltung 11 in bekannter Weise ermittelt wurden. Die Addierschaltung 13 bildet nun aus den Unwuchtwerten in den Lagerebenen und den Unwuchtwirkungen aufgrund der Lageabweichungen der Lagerzapfen durch eine Addition einen Gesamtunwuchtwert. Am Ausgang der Addierschaltung 13 liegen Signale an, die einer Anzeigevorrichtung 14 zugeführt werden, die jeweils ein Unwuchtergebnis für jede Lagerebene anzeigt. Diese Ergebnisse können auch einer Unwuchtausgleichsvorrichtung zugeführt werden, die daraus den Unwuchtausgleich für bestimmte Ausgleichsebenen ermittelt und diesen Ausgleich vornimmt.

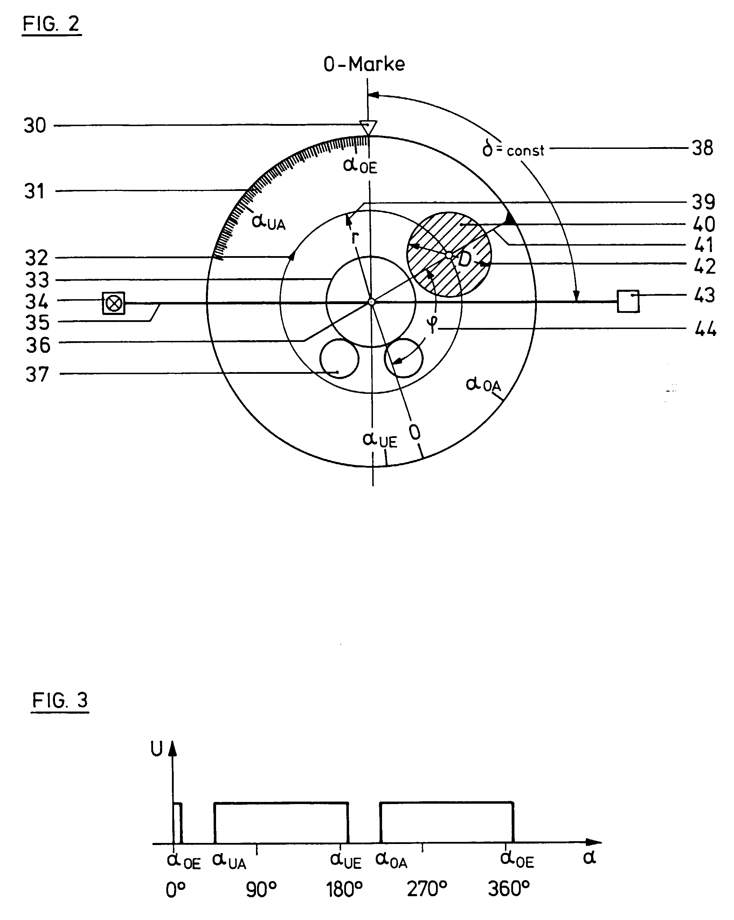

Die Fig. 2 zeigt die schematische Betrachtung der Drehwinkellage der Kurbelwelle 16 mit schematischer Darstellung des Winkelschrittgebers 4. Die kreisförmige Scheibe stellt eine gedachte Skalenscheibe 31 eines sogenannten Gray-Code-Gebers mit einer Auflösung von 8192 Schritten dar. Da diese Skalenscheibe 31 mit dem Antrieb 5 der Unwuchtmeßstation 1 gekoppelt ist, läuft sie synchron mit der Kurbelwelle 16 um. Diese Skalenscheibe 31 wird während des Betriebs durch einen optischen Sensor 6 abgetastet, der diese Abtastsignale 9 in elektrische Signale umwandelt und der Winkel- und Radienrechenschaltung in der Auswerteeinrichtung 9 zuführt. Die in der Zeichnung dargestellte Null-Marke stellt den vom maschinenbezogenen Referenzpunkt 30 dar, auf dem die gemessenen Anfangs- ($\alpha_{OA}$, $\alpha_{UA}$) und Endwinkel ($\alpha_{OE}$, $\alpha_{UE}$) bezogen sind. Die Skalenscheibe 31 ist fluchtend zur Drehachse 36 der Kurbelwelle 16 angeordnet. Horizontal zur Drehachse ist der Laserlicht-Erzeuger 34 dargestellt, der einen horizontalen Lichtstrahl 35 durch die Drehachse 36 zu einer gegenüber angeordneten Lichtempfangsvorrichtung 43 sendet. Die Kurbelwelle 16 ist durch einen Lagerzapfen 33 und einen beliebigen Kurbelzapfen 40 mit dem Durchmesser D 42 schematisch dargestellt. Der Lagerzapfen 33 ist in zwei Lagerrollen 37 gelagert, während der Kurbelzapfen 40 synchron mit der Skalenscheibe 31 um die Drehachse 36 umläuft. Bei dem dargestellten Kurbelzapfen 40 handelt es sich um einen beliebigen Kurbelzapfen, der in einem bestimmten Winkel φ gegenüber

dem Bezugssystem des Winkelschrittgebers 4 dargestellt ist. Für jeden Kurbelzapfen ist in der Winkelrechenschaltung 10 ein Kurbelzapfenwinkel φ 44 errechenbar, der sich aufgrund der ermittelten Lichtstrahlunterbrechungen mit seinen Anfangs($\alpha_{OA}$, $\alpha_{UA}$) und Endwinkelwerten ($\alpha_{OE}$, $\alpha_{UE}$) ergibt. Dabei sind die Anfangs- und Endwinkelwerte auf einen maschineneigenen Referenzpunkt 30 bezogen, der um einen konstanten Winkel δ 38 in einem gedachten Koordinatensystem gegenüber dem Lichtstrahl 35 versetzt ist. Die errechneten Kurbelzapfenwinkel φ 44 müssen nicht auf den maschineneigenen Referenzpunkt 30 bezogen sein, da es bei diesen lediglich auf deren Abweichung zu dem gespeicherten Sollwertwinkeln ankommt, woraus deren Unwuchtwirkung berechenbar ist.

Die Darstellung nach Fig. 3 der Zeichnung enthält eine Momentaufnahme, bei dem sich der dargestellte Kurbelzapfen 40 in einem willkürlich ausgewählten Winkel zur Null-Marke befindet. Bei angegebener Drehrichtung 32 wird der Mittelpunkt des Kurbelzapfens in einem bestimmten Abstand r 39 zur Drehachse 36 umlaufen und damit den Lichtstrahl 35 während einer Umdrehung für eine bestimmte Zeit zweimal unterbrechen. Dadurch wird in der Lichtempfangsvorrichtung 43 eine Impulsfolge, wie nach Fig. 3 dargestellt, erzeugt. Dabei gibt der Winkel $\alpha_{OE}$, den Winkel wieder, den die Skalenscheibe 31 erreicht, wenn der dargestellte Kurbelzapfen 40 den Hellbereich beendet nachdem sich der dargestellte Kurbelzapfen 40 oberhalb des horizontalen Lichtstrahls 35 bewegt hat. Dieser Winkel ist bezogen auf die dargestellte Nullmarke 30. Weiterhin gibt der Winkel $\alpha_{UA}$ den Winkel der Skalenscheibe 31 an, bei dem der dargestellte Kurbelzapfen 40 sich soweit unterhalb des Lichtstrahls befindet, bis die Lichtempfangsvorrichtung 43 den Lichtstrahl 35 wieder empfängt. Entsprechende Winkelangaben stellen die Winkel $\alpha_{OA}$ und $\alpha_{UE}$ dar, und zwar für den Bereich an dem der rotierende Kurbelzapfen 40 den unteren Hellbereich verläßt. Da eine derartige winkelmäßige Erfassung bei jedem Kurbelzapfen gesondert erfolgt und dies auf einen gemeinsamen Referenzpunkt 30 bezogen ist, können mit Hilfe der Winkelrechenschaltung 10 sowohl die vier Kurbelzapfenwinkel 33 als auch deren Umlaufradien 39 ermittelt werden. So stellt der dargestellte Winkel φ 44 den Kurbelzapfenwinkel 44 eines der vorhandenen Kurbelzapfen 40 zu dem Bezugssystem des Winkelschrittgebers 4 dar. Diese Werte sind nach den vorgenannten Formeln errechenbar, da die Kurbelzapfendurchmesser 42 vorbekannt sind.

Die Darstellung nach Fig. 1 der Zeichnung zeigt schematisch eine Kurbelwelle für einen Achtzylinder-Verbrennungsmotor. Eine derartige Meßeinrichtung ist aber auch für beliebige andere Kurbelwellentypen verwendbar. Dazu dient in erster Linie die vorbeschriebene Einstellvorrichtung 22, an der sowohl die Kurbelzapfendurchmesser 42 als auch deren Kurbeltriebersatzmassen einstellbar sind.

Zur Berechnung der einzelnen Kurbelzapfenwinkel 44 als auch der einzelnen Umlaufradien 39 der Kurbelzapfenmittelpunkte ist lediglich die Messung der Anfangs- $\alpha_{OA}$ und Endwinkel $\alpha_{OE}$ einer Hellphase bezogen auf den Referenzpunkt 30 erforderlich. Es ist jedoch aus Genauigkeitsgesichtspunkten zeckmäßig, beide Hellphasen während einer Umdrehung auszuwerten, da hierdurch ein eventueller Fehler in der Ausrichtung des Lichtstrahls 35 bezüglich des Schnittpunkts mit der Drehachse 36 kompensiert wird. Eine derartige Kompensation liegt in der Mittelwertbildung beider Auswerteergebnisse.

Entscheidend für die Genauigkeit einer derartigen Meßeinrichtung zur Lageabweichung ist ein stark gebündelter Lichtstrahl, dessen Strahldurchmesser klein ist. Dies wird vorteilhafterweise mit Hilfe üblicher Laser-Lichterzeuger erreicht.

Da die Unwuchtwirkung der Lageabweichungen der Kurbelzapfen im wesentlichen von der winkelmäßigen Abweichung der Lagerzapfen bestimmt wird, ist in vielen Bereichen bereits die Berücksichtigung der Unwuchtwirkung aufgrund der Winkelabweichung ausreichend.

Die Ausbildung der Auswerteschaltung 9 kann sowohl in Analog- als auch in Digitaltechnik ausgeführt werden.

## Patentansprüche

1. Verfahren zur Berücksichtigung von Lageungenauigkeiten der Kurbelzapfen (15,40) beim Auswuchten von Kurbelwellen (16), bei dem die Istlage der Kurbelzapfen (16,40) ermittelt wird und mit deren Sollage verglichen und deren Abweichung als Unwuchtwirkung errechnet und zur ermittelten Unwucht addiert wird, dadurch gekennzeichent, daß ein gebündelter Lichtstrahl (35) im Bereich jedes Kurbelzapfens (40,15) durch die Drehachse (36) gerichtet zu einem Empfänger gesendet wird, wobei er durch einen rotierenden Kurbelzapfen (40,15) mindestens einmal unterbrochen und diese Unterbrechung mittels eines mit der Kurbelwelle synchrom umlaufenden Winkelschrittgebers winkelmäßig erfaßt wird und aus den erfaßten Winkelwerten die Abweichung gegenüber einer Soll-Winkellage ermittelbar ist.

2. Verfahren zur Berücksichtigung von Lageungenauigkeiten der Kurbelzapfen beim Auswuchten von Kurbelwellen nach Anspruch 1, dadurch gekennzeichnet, daß der Lichtstrahl (35) durch den Kurbelzapfen (40,15) während mindestens einer Umdrehung zweimal unterbrochen wird, wobei deren Hellphasen oder deren Abdunklungsphasen durch deren Anfangs- und Endwinkelwerte erfaßt werden und daraus ein mittlerer Kurbelzapfenwinkel (44) ermittelt wird.

3. Verfahren zur Berücksichtigung von Lageungenauigkeiten der Kurbelzapfen beim Auswuchten von Kurbelwellen nach Anspruch 1 oder 2, dadurch gekennzeichnet, daß aus den ermittelten Winkelwerten unter Berücksichtigung der Kurbelzapfendurchmesser (42) ein Ist-Umlaufradius (39) jedes Kurbelzapfens (40,15) ermittelt wird und bei einer Abweichung von dessen Soll-Umlaufradius dessen Unwuchtwirkung zur winkelmäßigen Unwuchtwirkung addiert wird.

4. Verfahren zur Berücksichtigung von Lageungenauigkeiten der Kurbelzapfen beim Auswuchten von Kurbelwellen nach wenigstens einem der vorhergehenden Ansprüche, dadurch gekennzeichnet, daß die Anfangs- und Endwinkel bei der Unterbrechung des Lichtstrahls (35) durch die Kurbelzapfen (40,15) während der Unwuchtmeßphase, während der Anlaufphase oder währnd der Abbremsphase ermittelt werden.

5. Verfahren zur Berücksichtigung von Lageungenauigkeiten der Kurbelzapfen beim Auswuchten von Kurbelwellen nach wenigstens einem der vorhergehenden Ansprüche, dadurch gekennzeichnet, daß die Anfangs- und Endwinkellagen beim Unterbrechen des Lichtstrahls (35) durch die Kurbelzapfen (40, 15) während einer oder mehrerer festlegbarer Kurbelwellenumdrehungen erfaßt und daraus die einzelnen Kurbelzapfenwinkel (44) und/oder die Umlaufradien (39) der Kurbelzapfen jedes einzelnen Kurbelzapfens (40,15) ermittelt, gespeichert und aus den gespeicherten Einzelwerten für jeden Kurbelzapfen ein Mittelwert der Kurbelzapfenwinkel (44) und/oder der Umlaufradien (39) der Kurbelzapfen errechnet werden.

6. Verfahren zur Berücksichtigung von Lageungenauigkeiten der Kurbelzapfen beim Auswuchten von Kurbelwellen nach wenigstens einem der vorhergehenden Ansprüche, dadurch gekennzeichnet, daß Sollwerte der Kurbelzapfenwinkel (44) und/oder Sollwerte der Umlaufradien (39) der Kurbelzapfen durch den Meßlauf mittels einer Meisterwelle ermittelt und gespeichert werden.

7. Einrichtung zur Durchführung des Verfahrens nach wenigstens einem der Ansprüche 1 bis 6, bei der in einer Unwuchtmeßstation (1) für Kurbelwellen (16) für jeden Kurbelzapfen (15, 40) eine Lichtquelle (2) vorgesehen ist, die einen gebündelten Lichtstrahl (35) zu einer ihr gegenüberliegenden Lichtempfangsvorrichtung (7) sendet, wobei der Lichtstrahl (35) so ausgerichtet ist, daß er im Bereich des jeweiligen Kurbelzapfens (40, 15) die Drehachse (36) der Kurbelwelle schneidet, dadurch gekennzeichnet, daß ein Winkelschrittgeber (4) vorgesehen ist, der mit dem Antrieb (5) der Kurbelwelle (15,40) gekoppelt ist und Signale erzeugt, die der absoluten Winkelposition der auszuwuchtenden Kurbelwelle bei jeder Stellung entsprechen und daß eine Auswerte einrichtung (9) vorgesehen ist, der die Signale mindestens der Lichtempfangsvorrichtungen (7) und des Winkelschrittgebers (4) zugeführt werden und die daraus mit Hilfe von Rechenschaltungen (10,24,25) die mittleren Kurbelzapfenwinkel für jeden Kurbelzapfen (15,40) errechnet und diese Werte mit eingespeicherten Sollwerten vergleicht und bei einer Abweichung in entsprechende Unwuchtwerte umrechnet, wobei die Auswerteeinrichtung (9) auch eine Addierschaltung (19) enthält, die die Unwuchtwirkung der Lageungenauigkeiten mit der gemessenen Unwucht derart verknüpft, daß Unwuchtsignale erzeugt werden, die der gesamten Unwuchtwirkung in jeder Lagerebene entsprechen.

8. Einrichtung zur Ermittlung von Lageungenauigkeiten der Kurbelzapfen beim Auswuchten von Kurbelwellen nach Anspruch 7, dadurch gekennzeichnet, daß in der Auswerteeinrichtung (9) Rechenschaltungen (12,26,25) vorgesehen sind, die aus den ermittelten Winkelwerten unter Berücksichtigung der Kurbelzapfendurchmesser (42) den Ist-Umlaufradius (39) jedes Kurbelzapfens (40,15) ermitteln und bei Abweichung von dessen eingespeicherten Sollwert dessen Unwuchtwirkung errechnen und zur winkelmäßigen Unwuchtwirkung addieren.

9. Einrichtung zur Ermittlung von Lageungenauigkeiten der Kurbelzapfen beim Auswuchten von Kurbelwellen nach Anspruch 7, dadurch gekennzeichnet, daß die einzelnen Lichtquellen (2, 34) und deren zugeordnete Lichtempfangsvorrichtungen (7, 43) in der Unwuchtmeßstation (1) parallel zur zu messenden Kurbelwelle (16) angeordnet und dabei so ausgerichtet sind, daß jeder Lichtstrahl (35) im Bereich des zugehörigen Lagerzapfens (40, 15) senkrecht die Drehachse (35) schneidet.

**Claims**

1. Method of taking account of positional inaccuracies of the crankpins (15, 40) during balancing of crankshafts (16), in which the actual position of the crankpins (15, 40) is ascertained and compared with the desired position thereof, its deviation therefrom is calculated as unbalance effect and added to the ascertained unbalance, characterised in that in the region of each crankpin (40, 15) a concentrated light beam (35) directed through the axis of rotation (36) is sent to a receiver and is interrupted at least once by a rotating crankpin (40, 15), this interruption being detected in angular terms by means of a shaft-angle encoder which rotates in synchronism with the crankshaft, and the deviation with respect to a desired angular position can be ascertained from the determined angle values.

2. Method of taking account of positional inaccuracies of the crankpins during balancing of crankshafts according to Claim 1, characterised in that the light beam (35) is interrupted twice by the crankpin (40, 15) during at least one revolution, the bright phases or the darkening phases thereof being determined by the initial and final angle values thereof and a mean crankpin angle (44) being ascertained therefrom.

3. Method of taking account of positional inaccuracies of the crankpins during balancing of crankshafts according to Claim 1 or 2, characterised in that an actual radius of rotation (39) of each crankpin (40, 15) is ascertained from the ascertained angle values taking account of the crankpin diameters (42) and in the case of a deviation from the desired radius of rotation thereof the unbalance effect thereof is added to the unbalance effect in angular terms.

4. Method of taking account of positional inaccuracies of the crankpins during balancing of crankshafts according to at least one of the preceding claims, characterised in that the initial and final angles in the case of interruption of the light beam (35) by the crankpins (40, 15) are ascertained during the unbalance measurement phase, during the starting phase or during the braking phase.

5. Method of taking account of positional inaccuracies of the crankpins during balancing of crankshafts according to at least one of the preceding claims, characterised in that the initial and final angular positions in the case of interruption of the light beam (35) by the crankpins (40, 15) are determined during one or more determinable revolutions of the crankshaft and from them the individual crankpin angles (44) and/or the radii of rotation (39) of the crankpins are ascertained for each individual crankpin (40, 15) and stored and a mean value for the crankpin angles (44) and/or the radii of rotation (39) of the crankpins are calculated from the stored individual values for each crankpin.

6. Method of taking account of positional inaccuracies of the crankpins during balancing of crankshafts according to at least one of the preceding claims, characterised in that desired values for the crankpin angles (44) and/or desired values for the radii of rotation (39) of the crankpins are ascertained through the measurement run by means of a master shaft and are stored.

7. Apparatus for carrying out the method according to at least one of Claims 1 to 6, in which in an unbalance measurement station (1) for crankshafts (16) a light source (2) is provided for each crankpin (15, 40) and sends a concentrated light beam (35) to a light-receiving device (7) lying opposite it, the light beam (35) being aligned so that it intersects the axis of rotation (36) of the crankshaft in the region of the particular crankpin (40, 15), characterised in that a shaft-angle encoder (4) is provided which is coupled to the drive (5) for the crankshaft (15, 40) and generates signals which in each position correspond to the absolute angular position of the crankshaft to be balanced, and that an evaluation arrangement (9) is provided to which the signals at least from the light-receiving devices (7) and from the shaft-angle encoder (4) are supplied and which with the aid of arithmetic circuits (10, 24, 25) calculates from these signals the mean crankpin angles for each crankpin (15, 40) and compares these values with stored desired values and in the event of a deviation converts them into corresponding unbalance values, wherein the evaluation arrangement (9) also contains an addition circuit (19) which links the unbalance effect of the positional inaccuracies with the measured unbalance in such a way that unbalance signals are generated which correspond to the total unbalance effect in each bearing plane.

8. Apparatus for determining positional inaccuracies of the crankpins during balancing of crankshafts according to Claim 7, characterised in that in the evaluation arrangement (9) there are provided arithmetic circuits (12, 26, 25) which ascertain the actual radius of rotation (39) of each crankpin (40, 15) from the ascertained angle values taking account of the crankpin diameters (42) and in the event of deviation from the stored desired value thereof they calculate its unbalance effect and add it to the unbalance effect in angular terms.

9. Apparatus for determining positional inaccuracies of the crankpins during balancing of crankshafts according to Claim 7, characterised in that the individual light sources (2, 34) and the light-receiving devices (7, 43) associated therewith are disposed in the unbalance measurement station (1) parallel to the crankshaft (16) to be measured and in this case are aligned so that each light beam (35) intersects the axis of rotation (35) at right angles in the region of the appertaining bearing pin (40, 15).

**Revendications**

1. Procédé pour prendre en compte, pendant l'équilibrage de vilebrequins (16), les imprécisions de position des manetons de vilebrequin (15, 40), pour lequel la position réelle des manetons de vilebrequin (15, 40) est déterminée et comparée à sa position théorique et dont l'écart, exerçant un effet de balourd, est calculé et est ajouté au balourd déterminé, caractérisé en ce qu'un rayon lumineux (35) focalisé est dirigé dans la zone de chaque maneton de vilebrequin (40, 15), en passant par l'axe de rotation (36), et est envoyé à un récepteur, en étant interrompu au moins une fois par la rotation d'un maneton de vilebrequin (40, 15), et cette interruption étant appréhendée angulairement au moyen d'un capteur incrémental angulaire, tournant de façon synchrone avec le vilebrequin, et l'écart par rapport à une position angulaire de consigne étant susceptible d'être déterminé à partir des valeurs angulaires appréhendées.

2. Procédé pour prendre en compte pendant l'équilibrage de vilebrequins les imprécisions de position des manetons selon la revendication 1, caractérisé en ce que le rayon lumineux (35) est interrompu deux fois par le tourillon (40, 15) pendant un mouvement d'au moins une rotation, ses phases claires ou ses phases assombries étant appréhendées au moyen de ces valeurs angulaires, initiales et finales, et un angle de maneton (44) moyen étant déterminé à partir de cela.

3. Procédé pour prendre en compte pendant l'équilibrage de vilebrequins les imprécisions de position des manetons des vilebrequins selon la revendication 1 ou 2, caractérisé en ce que, à partir des valeurs angulaires déterminées, en prenant en compte le diamètre du maneton de vilebrequin (42), on détermine un rayon de rotation réelle (39) de chaque maneton (40, 15) et, en cas d'écart par rapport à un rayon de rotation de consigne, on ajoute son effet de déséquilibrage à l'effet de balourd qui est fonction de la position angulaire.

4. Procédé pour prendre en compte pendant l'équilibrage de vilebrequins les imprécisions de position des manetons de vilebrequins selon au moins l'une des revendications précédentes, caractérisé en ce que les angles initial et final sont déterminés lors de l'interruption du rayon lumineux (35) par les manetons de vilebrequin (40, 15) pendant la phase de mesure du balourd, sont déterminés pendant la phase de mise en mouvement, ou pendant la phase de freinage.

5. Procédé pour prendre en compte pendant l'équilibrage de vilebrequins les imprécisions de position des manetons de vilebrequins selon au moins l'une des revendications précédentes, caractérisé en ce que les positions angulaires initiales et finales sont appréhendées lorsque le rayon lumineux (35) est interrompu par les manetons (40, 15), pendant une ou plusieurs rotations pouvant être fixées du vilebrequin, et les différents angles de manetons de vilebrequins (44) obtenus à partir de cela et/ou les rayons de rotation (39) de chaque maneton (40, 15) individuel sont déterminés, mis en mémoire et une valeur moyenne de l'angle de manetons (44) et/ou des rayons de rotation (39) du maneton étant calculée à partir des valeurs individuelles et correspondant à chaque maneton.

6. Procédé pour prendre en compte pendant l'équilibrage de vilebrequins les imprécisions de position des manetons de vilebrequins selon au moins l'une des revendications précédentes, caractérisé en ce que des valeurs de consigne des angles de maneton de vilebrequin (44) et/ou des valeurs de consigne des rayons de rotation (39) des manetons sont déterminées par un fonctionnement de mesure effectuée au moyen d'un arbre maître et sont mis en mémoire.

7. Dispositif pour la mise en oeuvre du procédé selon au moins l'une des revendications 1 à 6, dans lequel, dans un poste de mesure de balourd (1) conçu pour des s vilebrequins (16) est prévu pour chaque maneton (15,40), une source lumineuse (2) qui envoie un rayon lumineux (35) focalisé à un dispositif photorécepteur placé en regard de celui-ci, le rayon lumineux (35) étant orienté de manière à ce qu'il coupe l'axe de rotation (36) du vilebrequin dans la zone du maneton (40,15) respectif, caractérisé en ce qu'est prévu un capteur incrémental angulaire (4), couplé à l'entraînement (5) du vilebrequin (15, 40) et produisant des signaux qui correspondent à la position angulaire absolue du vilebrequin à équilibrer, à chaque position, et en ce qu'est prévu un dispositif d'évaluation (9), auquel sont amenés les signaux d'au moins les dispositifs photorécepteurs (7) et du capteur incrémental angulaire (4) et qui calcule, à partir de e cela, à l'aide de circuits de calcul (10, 24, 25), les angles moyens de manetons de vilebrequin pour chaque maneton (15, 40) et compare ces valeurs avec des valeurs de consigne stockées en mémoire et, en cas d'écart, convertit par calcul en valeur de balourd correspondante, le dispositif d'évaluation (9) contenant également un circuit additionneur (19) qui combine l'effet de déséquilibrage des imprécisions de position avec le balourd mesuré, de manière à ce que soient produits des signaux de balourd qui correspondent dans chaque plan de palier à la totalité de l'effet de balourd.

8. Dispositif pour la mise en oeuvre du procédé selon la revendication 7, caractérisé en ce que dans le circuit d'évaluation (9) sont prévus des circuits de calcul (12, 26, 25) qui, à partir des valeurs angulaires déterminées, déterminent en prenant en compte le diamètre de maneton (42) le rayon réel de rotation (39) de chaque maneton (40, 15) et qui, en cas d'écart par rapport à sa valeur de consigne stockée en mémoire, détermine son effet de balourd et l'ajoute à l'effet de balourd lié à la position angulaire.

9. Dispositif pour la mise en oeuvre du procédé selon la revendication 7, caractérisé en ce que les différentes sources lumineuses (2, 34) et leurs dispositifs photorécepteurs (7, 43) associés sont disposés dans le poste de mesure de balourd (1), parallèlement au vilebrequin (16) à mesurer, et sont orientées de manière que chaque rayon lumineux (35) coupe l'axe de rotation (35) perpendiculairement dans la zone du maneton (40, 15) afférent.

FIG. 1

## FIG. 2

## FIG. 3